# EUROPEAN PATENT SPECIFICATION

(11) **EP 0 358 466 B1**
(45) Date of publication and mention of the grant of the patent: **08.11.1995**
(21) Application number: 89308997.9
(22) Date of filing: 06.09.1989
(51) Int. Cl.: H04L 27/12, H04B 1/707

(54) **A direct sequence modulation apparatus**
"Direct-sequence"-Modulationsgerät
Dispositif de modulation à séquence directe

(30) Priority: 06.09.1988 JP 222757/88
(43) Date of publication of application: 14.03.1990
(73) Proprietor: MITSUBISHI DENKI KABUSHIKI KAISHA, Tokyo (JP)
(72) Inventor: Tachika, Hisao Mitsubishi Denki K.K. Tsushinki, Amagasaki-shi Hyogo-ken (JP)
(74) Representative: Beresford, Keith Denis Lewis

(56) References cited:
- EP-A- 0 185 203
- ELECTRONICS LETTERS, vol. 18, no. 19, 16th September 1982, pages 827-829,Stevenage, GB; N. EKANAYAKE: "Serial synthesis of munimum-shift-keyed signals"

## Description

The present invention concerns a method of, and an apparatus (a modulator) for, direct sequence spread spectrum modulation.

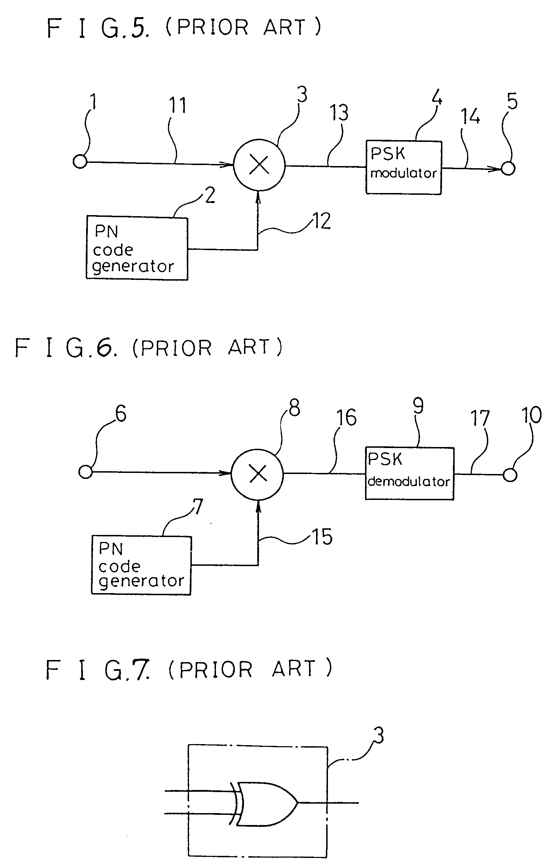

Figure 5 shows a system diagram of a prior art DS-PSK (Direct Sequence - Phase Shift Keying) modulator and figure 6 shows a system diagram of a prior art DS-PSK demodulator, which are disclosed at page 18 of the Japanese edition of "Spread Spectrum Systems" by R.C. Dixon, published by Jateck, Copyright (1976) John Wiley & Sons Inc., U.S.A.

In figure 5, reference numeral 1 designates a data input terminal. Reference numeral 2 designates a pseudo noise (hereinafter referred to as "PN") code generator. Reference numeral 3 designates a mixer which spreads the spectrum by multiplying data by the PN code. Reference numeral 4 designates a PSK modulator which modulates the output signal of the mixer 3. Reference numeral 5 designates an output terminal for the spread spectrum signal.

In figure 6, reference numeral 6 designates an input terminal for a received spread spectrum signal. Reference numeral 7 designates a PN code generator which generates a PN code signal which is synchronised with the output of PN code generator 2 at the transmitter (modulator). Reference numeral 8 designates a mixer which demodulates the received spread spectrum signal to a narrow band PSK signal by multiplying it by the PN code of generator 7 at the receiver (demodulator). Reference numeral 9 designates a PSK demodulator. Reference numeral 10 designates an output terminal for reproduced data.

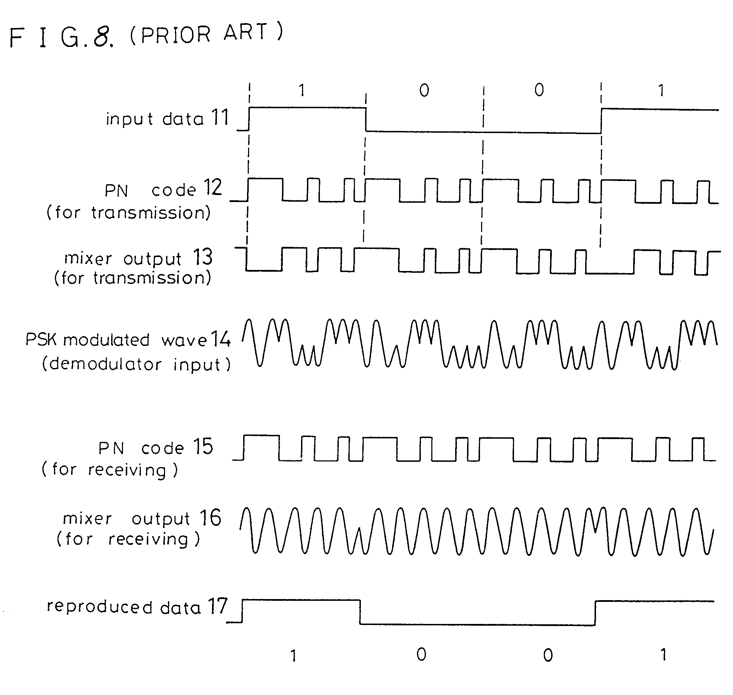

Figure 8 shows the waveforms of signals at different points of the DS-PSK modulator and the DS-PSK demodulator. In figure 8, reference numeral 11 designates an input data signal. Reference numeral 12 designates a PN code signal. Reference numeral 13 designates a mixer output signal. Reference numeral 14 designates a PSK modulation output signal which is transmitted to the DS-PSK demodulator. Reference numeral 16 designates a mixer output signal. Reference numeral 17 designates a reproduced data output signal.

The operation of this device will be described with reference to figure 8.

The input data signal 11 and the PN code signal 12 are spread by the mixer 3, and a mixer output signal 13 is obtained. This mixer output signal 13 is modulated by the PSK modulator 4, to result in a PSK modulated signal 14.

This PSK modulated signal 14 is transmitted to the DS-PSK demodulator and is demodulated to a narrow band PSK signal by multiplying it by the receiver's PN code signal 15 at the receiver's mixer 8, to result in a mixer output signal 16. This mixer output signal 16 is demodulated by the PSK demodulator 9, to result in a reproduced data signal 17.

Next, the DS-MSK and DS-GMSK modulator and demodulator which are derived from the above-described DS-PSK modulator and demodulator will be described.

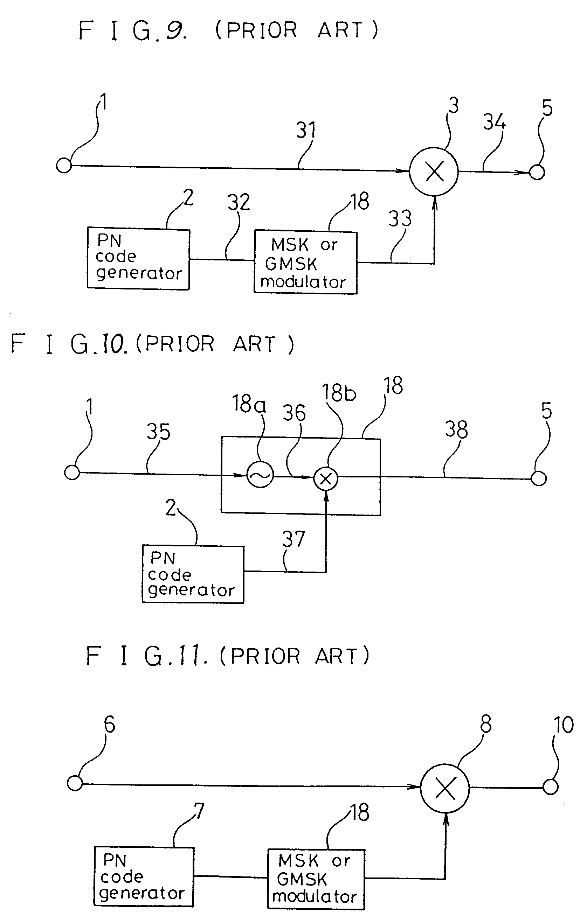

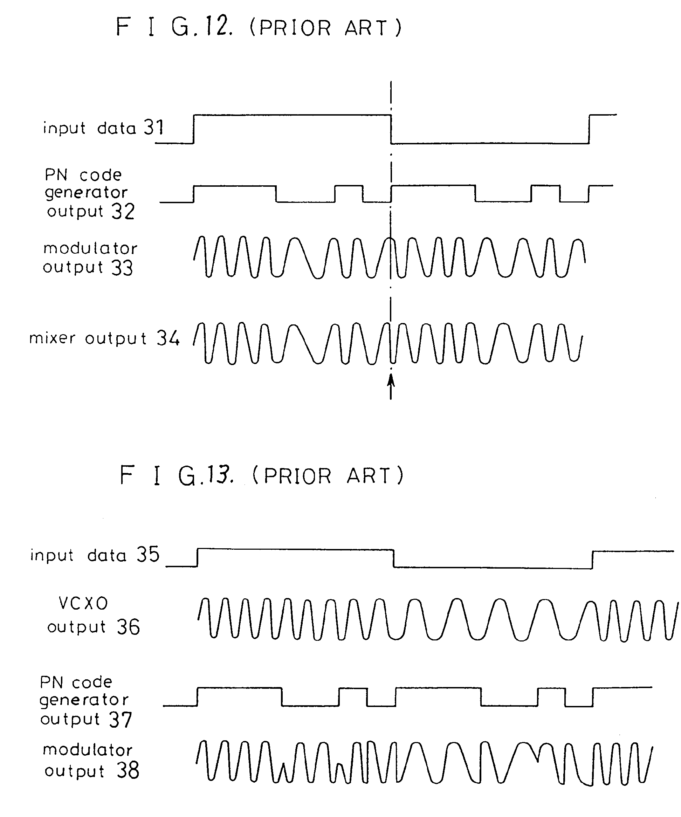

Figure 9 shows a DS-MSK modulator or a DS-GMSK modulator employing PSK data modulation (hereinafter referred to as DS-MSK/GMSK-PSK) and Figure 10 shows a DS-MSK or DS-GMSK modulator employing FSK (Frequency Shift Keying) data modulation (hereinafter referred to as DS-MSK/GMSK-FSK) respectively, which are easily derived from the conventional DS-PSK modulator and demodulator just described, and figure 11 shows a DS-MSK or DS-GMSK demodulator. In these figures, reference numeral 18 designates a MSK or GMSK modulator. Reference numeral 18a designates a VCXO (Voltage Controlled Crystal Oscillator). Reference numerals 1 to 10 designate the same elements as those shown in figures 5 and 6.

Figures 12 and 13 show waveforms of signals at different points of the DS-MSK/GMSK-PSK modulator and DS-MSK/GMSK-FSK modulator of figures 9 and 10, respectively.

Operation is as follows. In figure 9, the output signal 33 of MSK or GMSK modulator 18, which is modulated by the PN code signal 32, and the input data signal 31 are multiplied with the output signal 33 of modulator 18 at the mixer 3. On the other hand, in figure 10, VCXO 18a is used as an oscillator of MSK or GMSK modulator 18, and the VCXO output 36 is spread by the PN code 37 at the mixer 18b, to result in a DS-MSK/GMSK-FSK modulated signal 38.

In figure 11, the demodulation of the spread spectrum signal is performed by mixing the received signal with an MSK or GMSK signal modulated sequence of PN codes, which codes are the same as those generated at the transmitter (modulator). For the output signal of the modulator of figure 9, a PSK signal is obtained and for the output signals of the modulator of figure 10, an FSK reproduced signal is obtained.

The prior art DS-MSK and DS-GMSK modulators are constituted as described above, and in the modulator of figure 9, a steep phase shift arises at each edge of the data signal and this effects the characteristics of the MSK and GMSK signals, resulting in less extra band spectrum and less extra band noise. Furthermore, in the modulator of figure 10, a carrier signal is frequency modulated and at the receiver the extraction of this carrier signal from the received modulated signal is difficult. Also a VCXO 18a is required in the MSK or GMSK modulator 18.

The present invention is intended as a solution to the problems aforesaid.

A method of modulation and a modulator, each in accordance with the present invention are set out in the appended claims 1 and 2, respectively.

The modulator aforesaid may be embodied using, inter alia, a shift register and an exclusive OR circuit as specified in the appended dependant claim 3. In this context it is mentioned that European Patent Application EP-A-0185203 describes an MSK modulator also incorporating a shift register and exclusive OR-circuit. The signal at the output of the MSK modulator is a DS-MSK modulated code signal and is independent of data. Data encoding is not described.
Figure 1 is a diagram showing a direct sequence spread spectrum modulator according to a preferred embodiment of the present invention;
Figure 2 is a diagram showing the relationship between PN code signal, input data signal, and the phase shift of the DS-MSK output signal according to the preferred embodiment;
Figure 3 is a diagram showing waveforms obtained at different points in the modulator of figure 1;
Figure 4 is a diagram showing a modified arrangement of shift register 19 and exclusive OR circuit 20 components of the modulator of figure 1 when there is a difference of 3 + 4 N (N:integer) between the numbers "1" and "0" in the PN code, according to a modification of the preferred embodiment of the present invention;
Figure 5 is a diagram showing a conventional DS-PSK modulator;
Figure 6 is a diagram showing a conventional DS-PSK demodulator;
Figure 7 is a diagram showing an example of a conventional DS-PSK mixer;
Figure 8 is a timing chart for explaining the usual operation of the DS-PSK communications apparatus incorporating a conventional DS-PSK modulator and a conventional DS-PSK demodulator;
Figures 9 and 10 are diagrams showing a DS-MSK or DS-GMSK modulator derived from the conventional DS-PSK modulator;
Figure 11 is a diagram showing a DS-MSK or DS-GMSK demodulator;
Figure 12 is a timing chart showing waveforms of signals at different points of the modulator of figure 5; and
Figure 13 is a timing chart showing waveforms of signals at different points of the demodulator of figure 6.

A preferred embodiment of the present invention will be described in detail with reference to the drawings. The following description thereof is given by way of example only.

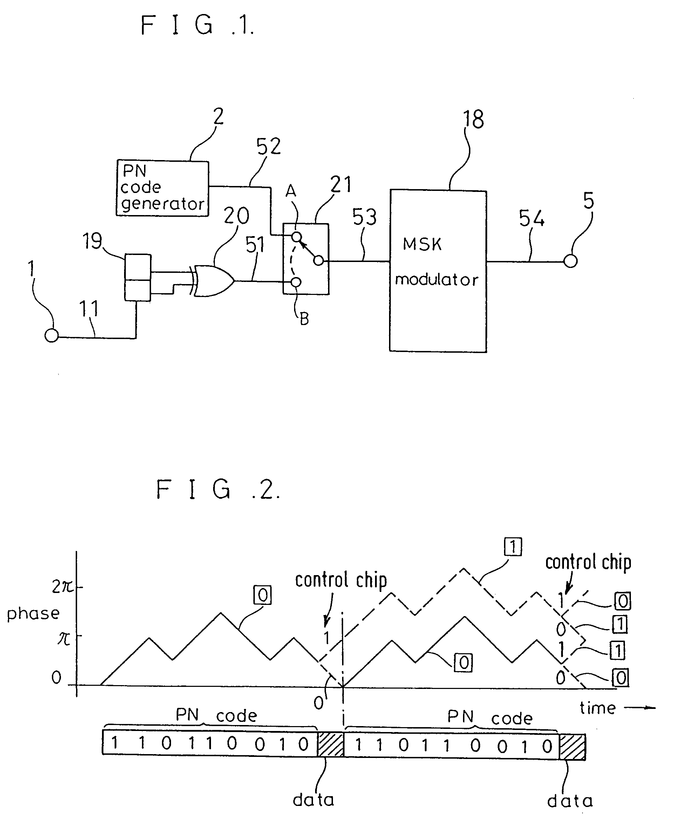

Figure 1 shows a direct sequence spread spectrum modulator according to a preferred embodiment of the present invention. In figure 1, reference numeral 1 designates a data input terminal. Reference numeral 2 designates a PN code generator. Reference numeral 5 designates a spread spectrum signal output terminal. Reference numeral 19 designates a 2-bit shift register. Reference numeral 20 designates an exclusive OR circuit. Reference numeral 21 designates a data selector.

Figure 2 shows the relationship between the PN code signal, data input signal and the phase shift of DS-MSK modulation signal in this embodiment. In figure 2, the solid line shows phase change in the DS-MSK signal when data "0" is MSK modulated by a PN code "110110010", and the dotted line shows phase change in the DS-MSK signal when data "1" is MSK modulated by the phase which is different by "π" from the phase of data "0".

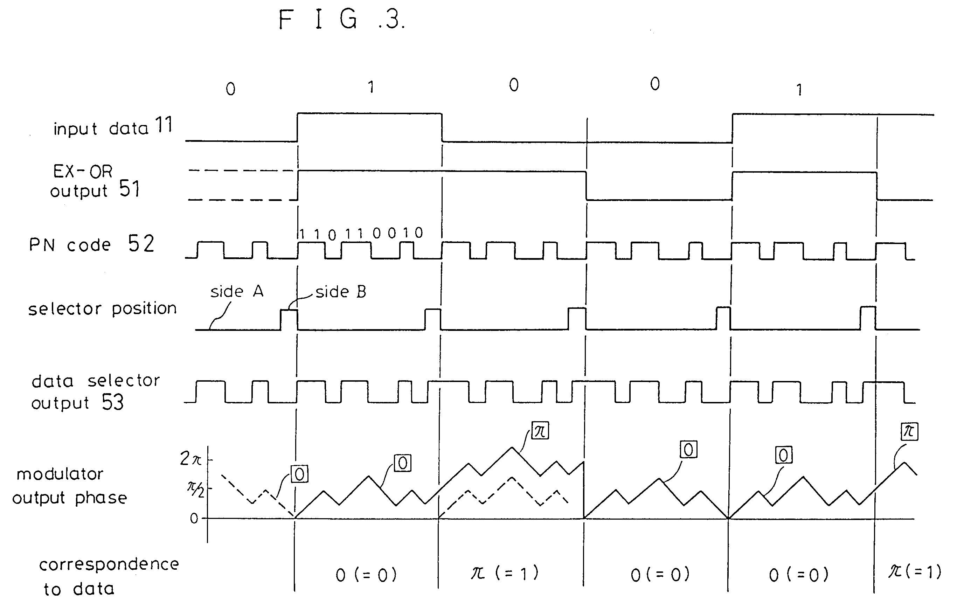

Figure 3 shows waveforms of signals at different points of the modulator of figure 1.

Operation is as follows.

A PN code "110110010" is input to the MSK modulator 18, and the PN code is modulated to be of 0 phase against a data bit "0" and to be of π phase against a data bit "1".

Now, it is assumed that the PN code signal is input to the MSK modulator 18 so that the PN code signal is at 0 phase and that the number of "1"s in the PN code sequence is larger than the number of "0"s by 1. Then, the phase of the final chip of the PN code sequence is π/2. Then, the initial chip of the next PN code sequence is only to be changed by + π/2 when the data which is to be modulated next is "1", and by - π/2 when it is "0".

When the final chip of the PN code is "0", the phase of the next PN code is of 0 phase when a control chip "0" is inserted and is of π phase when a control chip "1" is inserted. When the final chip of the preceding PN code sequence is "1", the phase of next PN code sequence is of π phase when a control chip "0" is inserted and is of 0 phase when a control chip "1" is inserted. This is represented in the following table 1.

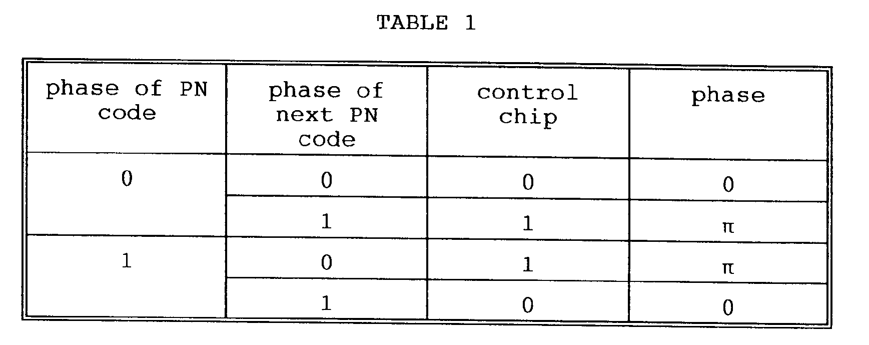

In order to realise the above-described operation, the operation of table 1 is conducted by the 2 bit shift register 19 and the exclusive OR circuit 20 in the construction of figure 1, and after the transmission of each PN code sequence 2 is concluded, the data selector 21 is switched to the exclusive OR circuit 20.

The demodulation can be conducted by the conventional demodulator shown in figure 6, and then reproduced data 17 corresponding to the 0 or π phase is obtained at the output of the demodulator 10.

In the above-illustrated embodiment the number of "1"s in the PN code is larger by one than the number of "0"s, and the PN code is different by π/2 phase between the leading edge and trailing edge of the PN code sequence. However, in all cases where the difference between the number of "1"s and "0"s in the PN code is 1 + 4 N (N:integer), the logic is the same and the present invention can be applied as described above. However, when the difference in the number of "1"s and "0"s in the PN code sequence is 3 + 4 N, the logic of table 1 should be replaced by that shown in table 2 below.

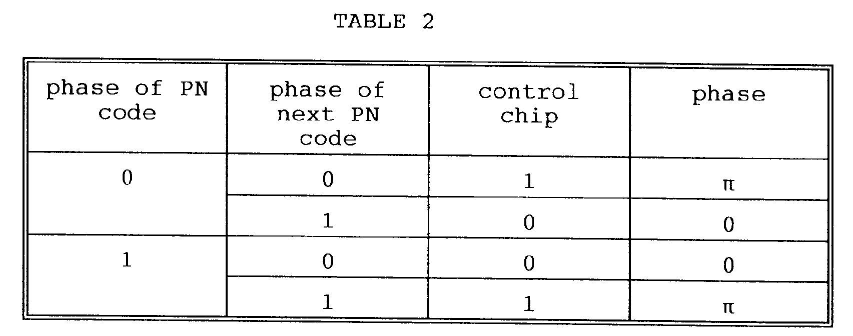

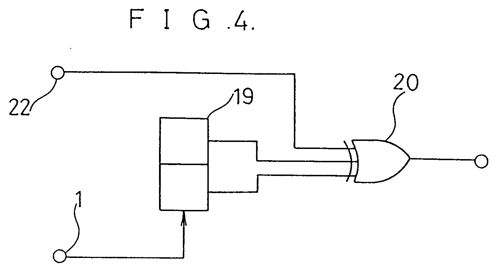

Figure 4 shows a circuit which easily realises switching of logic for these two alternatives. In figure 4, reference numeral 22 designates an input terminal for a PN code distinguishing signal which is "0" when the difference between the number of "1"s and "0"s in the PN code sequence is 1 + 4 N and which is "1" when it is 3 + 4 N.

The modulator required can be constructed in a small size and at a low cost. Improved MSK or GMSK characteristics are achieved since abrupt changes of phase at each data bit edge are eliminated.

## Claims

1. A method of direct sequence spread spectrum modulation comprising:
generating consecutive sequences of pseudo-noise (PN) code, and
producing a direct sequence spread spectrum modulated signal by inputting said consecutive sequences of pseudo-noise (PN) code to a minimum shift keying (MSK) or Gaussian minimum shift keying (GMSK) modulator (18), each code chip of each sequence of pseudo-noise (PN) code being represented in said direct sequence modulated signal by a corresponding phase shift of ± π/2;
which method is characterised by:
inserting a respective data dependent phase-shift control chip in between consecutive sequences of pseudo-noise (PN) code, whereby said direct sequence spread spectrum modulated signal shall be at either 0 or π phase corresponding to the start of each sequence of pseudo-noise (PN) code, each 0 or π phase thereof representing a respective bit of data.

2. A direct sequence spread spectrum modulator comprising a pseudo-noise code generator (2) for generating consecutive sequences of pseudo-noise (PN) code; and
a minimum shift keying (MSK) or Gaussian minimum shift keying (GMSK) modulator (18) responsive to the sequences of pseudo-noise code for producing a direct sequence spread spectrum modulated signal in which each code chip is represented by a corresponding phase shift of ± π/2;
which modulator is characterised by:
phase shift control chip insertion means (19 to 21) responsive to consecutive bits of an input data signal, for inserting a respective data dependent phase-shift control chip in between consecutive sequences of pseudo-noise (PN) code, and with the result that the direct sequence spread spectrum modulated signal is at 0 or π phase in correspondence to the start of each sequence of the pseudo-noise (PN) code, which phase 0 or π is representative of a respective bit of said input data signal.

3. A direct sequence spread spectrum modulator as claimed in claim 2, wherein said phase-shift control chip insertion means comprises:
a shift register (19) to which the input data signal is serially input;
an exclusive OR circuit (20) the inputs of which are connected to respective stages of the shift register (19); and
data selector means (21) for inserting in between consecutive sequences of pseudo-noise code, respective outputs (51) of said exclusive OR circuit (20).

4. A direct sequence spread spectrum modulator as claimed in claim 3, wherein said exclusive OR circuit (20) has an additional input (22) which receives a signal which is 0 or 1 dependent on whether the difference between the number of 0's and the number of 1's in each sequence of pseudo-noise code is 1+4N or 3+4N, where N is an integer.

## Patentansprüche

1. Direktsequenz-Streuspektrum-Modulationsverfahren, das aufweist:
ein Erzeugen fortlaufender Sequenzen eines Pseudorausch-(PN)-Codes, und
ein Erzeugen eines Direktsequenz-Streuspektrum-modulierten Signals mittels eines Eingebens der fortlaufenden Sequenzen eines Pseudorausch-(PN)-Codes in einen Minimalumtastungs-(MSK = minimum shift keying)- oder einen Gauß-Minimalumtastungs-(GMSK = Gaussian minimum shift keying)-Modulator (18), wobei jeder Codesplitter jeder Sequenz in dem direktsequenzmodulierten Signal durch eine entsprechende Phasenverschiebung von ± π/2 dargestellt ist;
wobei dieses Verfahren gekennzeichnet ist durch:
ein Einfügen eines jeweiligen datenabhängigen Phasenverschiebungs-Steuersplitters zwischen fortlaufenden Sequenzen eines Pseudorausch-(PN)-Codes, wodurch das Direktsequenz-Streuspektrum-modulierte Signal entsprechend dem Start jeder Sequenz eines Pseudorausch-(PN)-Codes entweder in 0-Phase oder π-Phase sein soll, wobei seine 0-Phase als auch π-Phase ein jeweiliges Datenbit darstellt.

2. Direktsequenz-Streuspektrum-Modulator mit einem Pseudorausch-Codegenerator (2), der fortlaufende Sequenzen eines Pseudorausch-(PN)-Codes erzeugt; und
einem Minalumtastungs-(MSK)- oder Gauß-Minalumtastungs-(GMSK)-Modulator (18), der auf die Sequenzen eines Pseudorausch-Codes reagiert und ein Direktsequenz-Streuspektrum-moduliertes Signal erzeugt, in welchem jeder Codesplitter durch eine entsprechende Phasenverschiebung von ± π/2 dargestellt ist;
wobei der Modulator gekennzeichnet ist durch:
eine Phasenverschiebungs-Steuersplitter-Einfügeeinrichtung (19 bis 21), die auf die fortlaufenden Bits eines Eingabedatensignals reagiert und einen jeweiligen datenabhängigen Phasenverschiebungs-Steuersplitter zwischen fortlaufende Sequenzen eines Pseudorausch-(PN)-Codes einfügt, und mit dem Ergebnis, daß das Direktsequenz-Streuspektrummodulierte Signal entsprechend dem Start jeder Sequenz des Pseudorausch-(PN)-Codes in 0- oder π-Phase ist, wobei die Phase 0 oder π ein jeweiliges Bit des Eingabedatensignals darstellt.

3. Direktsequenz-Streuspektrum-Modulator nach Anspruch 2, bei dem die Phasenverschiebungs-Steuersplitter-Einfügeeinrichtung aufweist:
ein Schieberegister (19), in welches das Eingabedatensignal seriell eingegeben wird;
eine Exklusiv-ODER-Schaltung (20), deren Eingänge an jeweilige Stufen des Schieberegisters (19) angeschlossen sind; und
eine Datenauswahleinrichtung (21), die jeweilige Ausgangssignale (51) der Exklusiv-ODER-Schaltung (20) zwischen fortlaufende Sequenzen eines Pseudorausch-Codes einfügt.

4. Direktsequenz-Streuspektrum-Modulator nach Anspruch 3, bei dem die Exklusiv-ODER-Schaltung (20) einen zusätzlichen Eingang (22) aufweist, welcher ein Signal aufnimmt, welches abhängig davon, ob die Differenz zwischen der Anzahl von Nullen und der Anzahl von Einsen in jeder Sequenz eines Pseudorausch-Codes 1+4N oder 3+4N ist, 0 oder 1 ist, wobei N eine Ganzzahl ist.

## Revendications

1. Procédé de modulation à spectre étalé à séquence directe comprenant:
la génération de séquences consécutives de code de pseudo-bruit (PN), et
la production d'un signal modulé à spectre étalé à séquence directe par introduction desdites séquences consécutives de code de pseudo-bruit (PN) dans un modulateur (18) à manipulation de décalage minimum (MSK) ou à manipulation de décalage minimum gaussien, chaque puce de code de chaque séquence de code de pseudo-bruit étant représentée dans ledit signal modulé à séquence directe par un déphasage correspondant de ± π/2;
ce procédé étant caractérisé par:
l'insertion d'une puce de commande de déphasage qui dépend de données respectives entre des séquences consécutives de code de pseudo-bruit (PN), grâce à quoi ledit signal modulé à spectre étalé à séquence directe sera soit à la phase 0 soit à la phase π correspondant au début de chaque séquence de code de pseudo-bruit (PN), chaque phase 0 ou π de celui-ci représentant un bit de données respectif.

2. Modulateur à spectre étalé à séquence directe comprenant un générateur (2) de code de pseudo-bruit pour engendrer des séquences consécutives de code de pseudo-bruit (PN) et
un modulateur (18) à manipulation de décalage minimum (MSK) ou à manipulation de décalage minimum gaussien sensible aux séquences de code de pseudo-bruit pour produire un signal modulé à spectre étalé à séquence directe dans lequel chaque puce de code est représentée par un déphasage correspondant de ± π/2;
ce modulateur étant caractérisé par:
des moyens (19 à 21) d'insertion de puce de commande de déphasage, sensibles à des bits consécutifs d'un signal de données d'entrée, pour insérer une puce de commande de déphasage qui dépend de données respectives entre des séquences consécutives de code de pseudo-bruit (PN), avec pour résultat le fait que le signal modulé à spectre étalé à séquence directe est à une phase de 0 ou π en correspondance avec le début de chaque séquence du code de pseudo-bruit (PN), cette phase 0 ou π étant représentative d'un bit respectif dudit signal de données d'entrée.

3. Modulateur à spectre étalé à séquence directe selon la revendication 2, dans lequel ledit moyen d'insertion de puce de commande de déphasage comprend:
un registre à décalage (19) auquel est appliqué en série le signal de données d'entrée;
un circuit OU exclusif (20) dont les entrées sont connectées aux étages respectifs du registre à décalage (19); et
un moyen (21) sélecteur de données pour insérer entre des séquences consécutives de code de pseudo-bruit, des sorties respectives (51) dudit circuit OU exclusif (20).

4. Modulateur à spectre étalé à séquence directe selon la revendication 3, dans lequel ledit circuit OU exclusif (20) a une entrée supplémentaire (22) qui reçoit un signal qui est 0 ou 1 en fonction du fait que la différence entre le nombre de 0 et le nombre de 1, dans chaque séquence du code de pseudo-bruit, est 1 + 4N ou 3 + 4N, N étant un nombre entier.
